# FASCICULE DE BREVET EUROPEEN

(11) **EP 4 496 767 B1**
(45) Date de publication et mention de la délivrance du brevet: **26.11.2025**
(21) Numéro de dépôt: 23710866.7
(22) Date de dépôt: 09.03.2023
(51) Int. Cl.: B66F 9/24, B66F 11/04, B66F 17/00

(54) **MACHINE DE TRAVAIL ÉQUIPÉE D'UNE UNITÉ DE STOCKAGE DE L'ÉNERGIE ÉLECTRIQUE**
ARBEITSMASCHINE MIT EINEM ELEKTRISCHEN ENERGIESPEICHER
WORK MACHINE EQUIPPED WITH AN ELECTRICAL ENERGY STORAGE UNIT

(30) Priorité: 22.03.2022 FR 2202520
(43) Date de publication de la demande: 29.01.2025
(73) Titulaire: MANITOU BF, 44150 Ancenis (FR)
(72) Inventeur: KAMBA, Elie, 44150 ANCENIS (FR); OGER, Stéphane, 44150 ANCENIS (FR)
(74) Mandataire: Loyer & Abello
(86) Numéro de dépôt international: PCT/EP2023/056061
(87) Numéro de publication internationale: WO 2023/180086

(56) Documents cités:
- JP-A- 2016 222 401
- US-A1- 2021 276 423
- US-B2- 8 060 400

## Description

### Domaine technique

L'invention se rapporte au domaine des machines de travail et concerne plus particulièrement les machines de travail électriques, c'est-à-dire celles qui sont équipées d'une unité de stockage de l'énergie électrique pour fournir de l'énergie à la machine de travail.

L'invention concerne plus particulièrement les machines de travail électriques comportant une structure de propulsion pour permettre le déplacement de la machine de travail et un appareil de manutention de charge et dans lesquelles l'unité de stockage de l'énergie électrique est configurée pour fournir de l'énergie à la structure de propulsion et à l'appareil de manutention de charge.

### Arrière-plan technologique

Dans l'état de la technique, il est connu d'équiper les machines de travail électriques avec des dispositifs visant à éviter que leur batterie n'atteigne des états de décharge profonde, car de tels états de décharge sont susceptibles de dégrader significativement leur durée de vie.

Le document JP2016222401 concerne une grue équipée d'une structure de propulsion et d'un appareil de manutention de charge qui sont alimentés en énergie électrique par une batterie. Il divulgue un procédé de contrôle d'une telle grue dans lequel on détermine l'état de charge de la batterie, on le compare avec des valeurs seuils et l'on autorise ou interdit certaines opérations de la grue en fonction du résultat de la comparaison précitée. Ainsi, si la batterie présente un état de charge satisfaisant et que sa tension est égale ou supérieure à une première valeur seuil de tension, la grue peut être déplacée et utilisée sans aucune restriction sur les capacités de déplacement ou les opérations de grutage. Si la batterie présente un état de charge plus faible et qu'en conséquence sa tension est inférieure à la première valeur seuil de tension précitée, tout en étant supérieure à une deuxième valeur seuil de tension, inférieure à la première valeur seuil de tension, les opérations de grutage sont restreintes aux simples opérations nécessaires pour déposer la charge, ramener le dispositif de grue ou le dispositif de stabilisation dans leur position repliée et déplacer la grue. Enfin, si la batterie présente un état de charge encore plus faible et que sa tension est inférieure à la deuxième valeur seuil précitée, le fonctionnement de la grue s'arrête et il n'est plus possible de la déplacer ni de déplacer son appareil de manutention de charge.

Un tel procédé de contrôle n'est pas pleinement satisfaisant. En particulier, il subsiste un risque important que la batterie atteigne l'état de charge correspondant à la deuxième valeur seuil entraînant ainsi l'arrêt de la grue alors que celle-ci est localisée dans un lieu difficile d'accès, par exemple sur un chantier de construction.

Le document US 2021/276423 A1 divulgue un dispositif de levage qui comprend plusieurs batteries et un contrôleur configuré pour évaluer l'état de charge de ces batteries. Le contrôleur peut en outre réaliser une opération de contrôle dans laquelle si l'état de charge des batteries est inférieur à une valeur de seuil, certaines fonctions du dispositif sont interdites. Le document US 2021/276423 A1 divulgue le préambule des revendications 1 et 11.

Le document US 8,060,400 B2 divulgue un procédé qui impose à un opérateur de réaliser des opérations de contrôle sur une machine de manutention avant de décider si cette machine de manutention doit être mise en service. Parmi les opérations de contrôle préalables, la charge de la batterie peut être vérifiée. Il est possible de déroger aux opérations de contrôle préalables à la mise en service de la machine de manutention, en cas d'urgence.

### Résumé

Une idée à la base de l'invention est de proposer une machine de travail équipée d'une unité de stockage de l'énergie électrique pour fournir de l'énergie à la machine de travail et qui permette d'éviter que l'unité de stockage d'énergie atteigne des niveaux de décharge profonde susceptibles de dégrader sa durée de vie tout en limitant encore davantage les risques que la machine de travail se trouve complètement immobilisée dans une situation dans laquelle l'accès à la machine de travail serait délicat.

Selon un mode de réalisation, l'invention fournit une machine de travail comprenant :
- un châssis ;
- une structure de propulsion en contact avec le sol pour permettre un déplacement de la machine de travail ;
- un appareil de manutention de charge monté mobile par rapport au châssis ;
- une unité de stockage de l'énergie électrique qui est agencée pour fournir de l'énergie électrique à la structure de propulsion et à l'appareil de manutention de charge ;
- un dispositif d'évaluation de l'état de charge qui est configuré pour déterminer une valeur V représentative de l'état de charge de ladite unité de stockage de l'énergie électrique ;
- un dispositif d'authentification configuré pour émettre un signal d'autorisation en réponse à une action d'authentification ; et
- une unité de commande qui est configurée pour :
   - comparer la valeur V à un seuil V₁ ;
   - activer un mode opérations de déplacement et manutention interdites dans lequel le fonctionnement de la structure de propulsion et le fonctionnement de l'appareil de manutention de charge sont empêchés lorsque la valeur V est inférieure ou égale au seuil V₁; et
   - activer un mode secours dans lequel le fonctionnement de la structure de propulsion est autorisé afin de permettre un déplacement de la machine de travail en réponse à l'émission du signal d'autorisation par le dispositif d'authentification pendant que le mode opérations de déplacement et manutention interdites est actif.

Ainsi, d'une part, l'unité de stockage de l'énergie électrique est protégée contre les états de décharge profonde en empêchant de manière préventive le fonctionnement de la structure de propulsion et de l'appareil de manutention de charge lorsque l'état de charge de l'unité de stockage de l'énergie électrique à atteint le seuil V₁. D'autre part, les caractéristiques précitées permettent à un opérateur privilégié de s'authentifier pour accéder au mode secours lui permettant de déplacer la machine de travail vers un dispositif de rechargement de l'unité de stockage de l'énergie électrique ou vers un véhicule de transport apte à transporter la machine de travail, alors que l'état de charge de l'unité de stockage de l'énergie électrique est inférieur ou égal à V1. Ceci permet notamment d'éviter d'immobiliser totalement la machine de travail dans des situations où sa récupération serait excessivement difficile (par exemple, sur un chantier de construction).

Selon des modes de réalisation, une telle machine de travail peut comporter une ou plusieurs des caractéristiques suivantes.

Selon un mode de réalisation, l'unité de commande est configurée pour :
- comparer la valeur V à un seuil V₂ supérieur à V_{1 ;}
- activer un mode déplacement seulement dans lequel le fonctionnement de la structure de propulsion est autorisé et le fonctionnement de l'appareil de manutention de charge est empêché lorsque la valeur V est inférieure ou égale au seuil V₂ et est supérieure au seuil V₁.

Ainsi, un tel mode permet de stopper le fonctionnement de l'appareil de manutention de charge de manière préventive avant que ne soit activé le mode opérations de déplacement et manutention interdites dans lequel le fonctionnement de la structure propulsion est également interdit, ce qui incite l'opérateur à déplacer la machine de travail pour recharger l'unité de stockage de l'énergie électrique avant que son état de charge n'atteigne le seuil V₁.

Selon un mode de réalisation, l'unité de commande est configurée pour :
- comparer la valeur V à un seuil V₃ supérieur à V_{2 ;}
- activer un mode opérations de manutention limitées dans lequel le fonctionnement de la structure de propulsion est autorisé et le fonctionnement de l'appareil de manutention de charge est restreint lorsque la valeur V est inférieure ou égale au seuil V₃ et supérieure au seuil V₂ ; et

- activer un mode normal dans lequel le fonctionnement de la structure de propulsion et le fonctionnement de l'appareil de manutention de charge sont autorisés lorsque la valeur V est supérieure au seuil V₃.

Ainsi, un tel mode opérations de manutention limitées permet d'inciter ou de forcer l'utilisateur de la machine de travail à arrêter les opérations de manutentions pour conserver une autonomie d'énergie suffisante pour pouvoir déplacer la machine de travail vers un dispositif de rechargement ou vers un véhicule de transport.

Selon un mode de réalisation, l'unité de commande est configurée pour :
- comparer la valeur V à un seuil V₃ supérieur à V_{1 ;}
- activer un mode opérations de manutention limitées dans lequel le fonctionnement de la structure de propulsion est autorisé et le fonctionnement de l'appareil de manutention de charge est restreint lorsque la valeur V est inférieure ou égale au seuil V₃ ; et

- activer un mode normal dans lequel le fonctionnement de la structure de propulsion et le fonctionnement de l'appareil de manutention de charge sont autorisés lorsque la valeur V est supérieure au seuil V_{3.}

Selon un mode de réalisation, l'unité de commande est configurée de sorte que, dans le mode opérations de manutention limitées, la restriction au fonctionnement de l'appareil de manutention de charge est choisie parmi une limitation aux opérations de déplacement de l'appareil de manutention de charge en direction d'une position repliée , une limitation de la vitesse maximale de déplacement de l'appareil de manutention de charge par rapport à une vitesse maximale de déplacement de l'appareil de manutention de charge dans le mode normal, une limitation de la puissance maximale disponible pour le déplacement de l'appareil de manutention de charge par rapport à une puissance maximale disponible pour le déplacement de l'appareil de manutention de charge dans le mode normal et l'une quelconque de leurs combinaisons.

Selon un mode de réalisation, l'unité de commande est configurée pour :
- comparer la valeur V à un seuil V₄ supérieur à V₁ ; et
- générer un signal d'alerte lorsque la valeur est inférieure ou égale à V₄.

Selon un mode de réalisation, la machine de travail comprend en outre un indicateur visuel de l'état de charge de l'unité de stockage de l'énergie, l'indicateur visuel étant configuré pour délivrer une information représentative d'un état complètement déchargé de l'unité de stockage de l'énergie électrique lorsque la valeur V est inférieure ou égale à V₁.

Selon un mode de réalisation, le seuil V1 correspond à un état de charge de l'unité de stockage de l'énergie électrique qui est compris entre 20 et 34 %, de préférence entre 25 et 29%, par exemple de l'ordre de 27 %. Ainsi, le mode opérations de déplacement et manutention interdites est activé avant que l'unité de stockage d'énergie électrique n'ait atteint des niveaux de décharge profonde situés en dessous de 20 %. En outre, l'unité de stockage d'énergie électrique conserve, en mode secours, une autonomie permettant à la machine de travail d'être déplacée par l'opérateur privilégié en vue d'être rechargée, avant que de tels niveaux de décharge profonde ne soient atteints.

Selon un mode de réalisation, le dispositif d'authentification comporte une unité de mémoire stockant un mot de passe, une unité de saisie pour saisir une chaîne de caractère, le dispositif d'authentification étant configuré pour émettre le signal d'autorisation lorsque la chaîne de caractère correspond au mot de passe mémorisé.

Selon un mode de réalisation, la structure de propulsion comporte un moteur de propulsion électrique qui est accouplé à au moins un essieu de la machine de travail et qui est alimenté en énergie par l'unité de stockage de l'énergie électrique.

Selon un mode de réalisation, l'appareil de manutention de charge comporte un dispositif d'entraînement de l'appareil de manutention de charge qui est électrique ou électro-hydraulique.

Selon un mode de réalisation, l'invention fournit aussi un procédé de commande d'une machine de travail comprenant un châssis ; une structure de propulsion en contact avec le sol pour permettre un déplacement de la machine de travail ; un appareil de manutention de charge monté mobile par rapport au châssis, et une unité de stockage de l'énergie électrique qui est agencée pour fournir de l'énergie électrique à la structure de propulsion et à l'appareil de manutention de charge ; le procédé de commande comportant les étapes suivantes :
- déterminer une valeur V représentative de l'état de charge de ladite unité de stockage de l'énergie électrique ;
- comparer la valeur V à un seuil V₁ ;
- activer un mode opérations de déplacement et manutention interdites dans lequel le fonctionnement de la structure de propulsion et le fonctionnement de l'appareil de manutention de charge sont empêchés lorsque la valeur V est inférieure ou égale au seuil V₁; et
- activer un mode secours dans lequel le fonctionnement de la structure de propulsion est autorisé afin de permettre un déplacement de la machine de travail en réponse à l'émission d'un signal d'autorisation par un dispositif d'authentification en réponse à une action d'authentification pendant que le mode opérations de déplacement et manutention interdites était actif.

Selon des modes de réalisation, un procédé peut comporter une ou plusieurs des caractéristiques suivantes.

Selon un mode de réalisation, le procédé comporte en outre les étapes suivantes :
- comparer la valeur V à un seuil V₂ supérieur à V_{1 ;}
- activer un mode déplacement seulement dans lequel le fonctionnement de la structure de propulsion est autorisé et le fonctionnement de l'appareil de manutention de charge est empêché lorsque la valeur V est inférieure ou égale au seuil V₂ et est supérieure au seuil V₁.

Selon un mode de réalisation, le procédé comporte en outre les étapes suivantes :
- comparer la valeur V à un seuil V₃ supérieur à V_{2 ;}
- activer un mode opérations de manutention limitées dans lequel le fonctionnement de la structure de propulsion est autorisé et le fonctionnement de l'appareil de manutention de charge est restreint lorsque la valeur V est inférieure ou égale au seuil V₃ et supérieure au seuil V₂ ; et
- activer un mode normal dans lequel le fonctionnement de la structure de propulsion et le fonctionnement de l'appareil de manutention de charge sont autorisés lorsque la valeur V est supérieure au seuil V₃.

Selon un mode de réalisation, le procédé comporte en outre les étapes suivantes :
- comparer la valeur V à un seuil V₃ supérieur à V_{1 ;}
- activer un mode opérations de manutention limitées dans lequel le fonctionnement de la structure de propulsion est autorisé et le fonctionnement de l'appareil de manutention de charge est restreint lorsque la valeur V est inférieure ou égale au seuil V₃ ; et
- activer un mode normal dans lequel le fonctionnement de la structure de propulsion et le fonctionnement de l'appareil de manutention de charge sont autorisés lorsque la valeur V est supérieure au seuil V₃.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1] La figure 1 est une vue en perspective d'une machine de travail, du type nacelle élévatrice de personnes.
[Fig.2] La figure 2 est une illustration schématique des équipements électriques d'une machine de travail, du type de celle représentée sur la figure 1.
[Fig.3] La figure 3 est un diagramme illustrant les différents modes de fonctionnement de la machine de travail lorsque l'unité de stockage de l'énergie électrique se décharge.

### Description des modes de réalisation

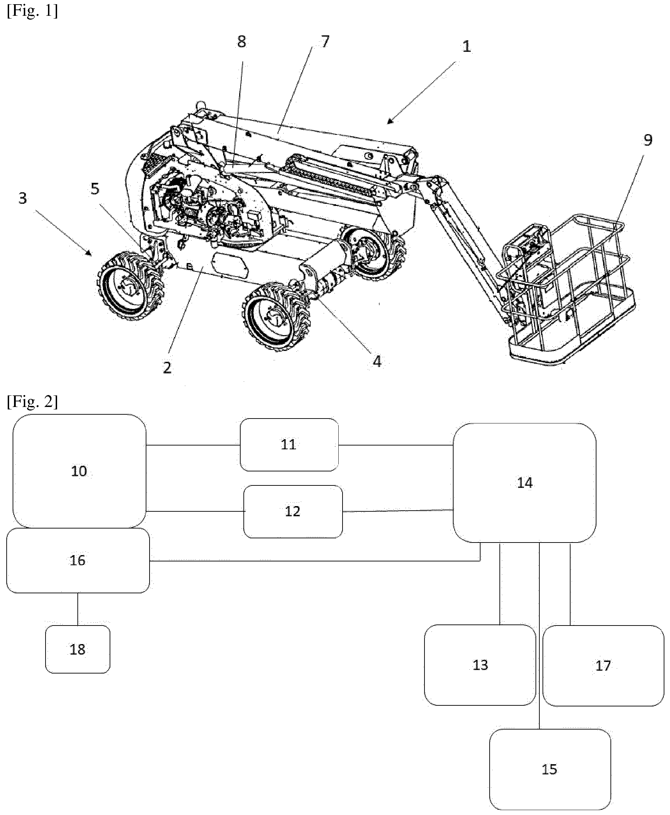

En référence à la figure 1, on décrit une machine de travail 1 qui, dans le mode de réalisation représenté, est une nacelle élévatrice. Bien entendu, l'invention s'applique à d'autres types de machines de travail, tels que des chariots télescopiques, des chariots à mât, des excavatrices, des chargeuses, des grues ou autres.

La machine de travail 1 comporte un châssis 2 ainsi qu'une structure de propulsion 3 en contact avec le sol pour permettre le déplacement de la machine de travail 1 sur le sol.

Dans le mode de réalisation représenté, la structure de propulsion 3 comporte deux essieux 4, 5, un essieu avant et un essieu arrière, qui sont chacun montés sur le châssis 2 selon un axe transversal et sont chacun équipés de deux roues, l'une à gauche et l'autre à droite. Au moins un des deux essieux 4, 5 et, de préférence, les deux sont moteurs et sont, pour ce faire, accouplés à un moteur électrique, non représenté sur la figure 1, par l'intermédiaire d'un dispositif de transmission. Dans un mode de réalisation alternatif, la structure de propulsion 3 comporte des chenilles.

Par ailleurs, la machine de travail 1 comporte un appareil de manutention de charge 6. Sur la figure 1, l'appareil de manutention de charge 6 comporte un bras de levage 7 monté pivotant sur le châssis 2 de la machine de travail 1 autour d'au moins un axe horizontal. Dans le mode de réalisation illustré, le bras de levage 7 comporte plusieurs parties qui sont montées articulées les unes aux autres. Dans d'autres modes de réalisation, le bras de levage 7 est télescopique et comporte au moins deux parties coulissantes l'une dans l'autre.

L'appareil de manutention de charge 6 comporte au moins un vérin 8 permettant de faire pivoter le bras de levage 7 par rapport au châssis 2. Pour ce faire, le vérin 8 comporte une première extrémité montée articulée sur le châssis 2 de la machine de travail 1 et une deuxième extrémité montée articulée sur le bras de levage 7. Le bras de levage 7 est ainsi apte à se déployer à partir de sa position repliée, de rangement, représentée sur la figure 1.

Par ailleurs, le bras de levage 7 comporte une extrémité distale qui est équipée d'un accessoire 9 ou d'un porte-accessoire modulaire susceptible de recevoir des accessoires de plusieurs types. Dans le mode de réalisation représenté, l'accessoire 9 est un panier de nacelle. Toutefois, dans d'autres mode de réalisation, l'accessoire 9 est un outil de travail, tel qu'une paire de fourches, un godet, un treuil, une pince ou autres.

En relation avec la figure 2, on décrit ci-dessous les équipements électriques de la machine de travail 1.

La machine de travail 1 comporte une unité de stockage de l'énergie électrique 10. L'unité de stockage de l'énergie électrique 10 comporte, par exemple, une ou plusieurs batteries, par exemple du type plomb-acide ou du type lithium-ion. L'unité de stockage de l'énergie électrique 10 est raccordée électriquement à au moins un moteur électrique 11 afin de l'alimenter en énergie.

Dans le mode de réalisation représenté, l'unité de stockage de l'énergie électrique 10 alimente un moteur électrique 11 ainsi qu'un dispositif d'entraînement 12 de l'appareil de manutention de charge 6. Le moteur électrique 11, désigné ci-après moteur de propulsion 11, appartient à la structure de propulsion 3 et est destiné à assurer la propulsion de la machine de travail 1. Pour ce faire, le moteur de propulsion 11 est accouplé par un dispositif de transmission, non représenté, à l'un des deux essieux 4, 5 ou aux deux. Le dispositif de transmission peut être un dispositif mécanique ou un dispositif hydraulique.

Le dispositif d'entraînement 12 de l'appareil de manutention de charge 6 peut être électrique et inclure des actionneurs électriques. Le dispositif d'entrainement 12 peut également être électrohydraulique et inclure une pompe entrainée par un moteur électrique, un ou plusieurs actionneurs hydrauliques, tels que le vérin 8 permettant de déplacer le bras de levage 7, des distributeurs hydrauliques, etc.

La machine de travail 1 comporte au moins un organe de commande 13 de la structure de propulsion 3, tel qu'une pédale d'accélération, qui est configuré pour délivrer des demandes d'actionnement du moteur de propulsion 11 à une unité de commande 14. La machine de travail 1 comporte également au moins un organe de commande 15 de l'appareil de manutention de charge 6, par exemple du type joystick, qui est configuré pour délivrer des demandes d'actionnement de l'appareil de manutention de charge 6 à l'unité de commande 14.

Par ailleurs, la machine de travail 1 comporte un dispositif d'évaluation de l'état de charge 16 qui est associé à l'unité de stockage de l'énergie électrique 10 et qui est configuré pour déterminer une valeur V représentative de l'état de charge de l'unité de stockage de l'énergie électrique 10 et la transmettre à l'unité de commande 14. L'état de charge est une mesure relative de la quantité d'énergie stockée correspondant au ratio entre la charge de l'unité de stockage de l'énergie électrique 10 à un certain moment et sa capacité totale, à l'origine.

Selon un mode de réalisation, le dispositif d'évaluation de l'état de charge 16 comporte un capteur de tension qui délivre une mesure de la tension, en circuit ouvert, aux bornes de l'unité de stockage de l'énergie électrique 10. La tension aux bornes de l'unité de stockage de l'énergie électrique 10 variant en fonction de son niveau de charge, une telle mesure de la tension aux bornes de l'unité de stockage de l'énergie électrique 10 permet d'estimer son état de charge.

Selon un autre mode de réalisation, le dispositif d'évaluation de l'état de charge 16 comporte un compteur de coulomb qui mesure le courant durant le chargement ou le déchargement de l'unité de stockage de l'énergie et l'intègre, ce qui permet de déterminer la quantité de charges injectées ou soutirées à l'unité de stockage de l'énergie électrique 10 et ainsi de quantifier son état de charge.

Par ailleurs, la machine de travail 1 est équipée d'un dispositif d'authentification 17. Le dispositif d'authentification peut être disposé à tout endroit approprié pour être utilisé par un opérateur, par exemple dans une cabine de pilotage de la machine s'il en existe ou sur un pupitre de commande disposé dans la nacelle 9 ou encore sur un côté du châssis 2.

Le dispositif d'authentification 17 est configuré pour délivrer un signal d'autorisation S1 en réponse à une action d'authentification. Selon un mode de réalisation, le dispositif d'authentification 17 utilise une authentification par mot de passe. Pour ce faire, le dispositif d'authentification 17 comporte une unité de mémoire qui stocke un mot de passe ainsi qu'une unité de saisie pour saisir une chaîne de caractère. Dans ce cas, le dispositif d'authentification 17 compare la chaîne de caractère saisie via l'unité de saisie avec le mot de passe mémorisée dans l'unité de mémoire et délivre le signal d'autorisation S1 lorsque la chaîne de caractère correspond au mot de passe mémorisé. Selon d'autres modes de réalisation, le dispositif d'authentification 17 utilise d'autres méthodes d'authentification. Le dispositif d'authentification 17 peut notamment comporter un lecteur destiné à reconnaitre une preuve matérielle, tel qu'une clef ou une carte. Le dispositif d'authentification 17 peut également comporter un lecteur biométrique destiné à reconnaitre un ou plusieurs identificateurs biométriques. Selon un mode de réalisation, le dispositif d'authentification 17 utilise une authentification multi-facteur utilisant la combinaison d'au moins deux des méthodes précitées.

Le dispositif d'authentification 17 permet notamment de délivrer un signal d'autorisation S1 permettant à un opérateur privilégié d'accéder à un mode secours dont l'activation sera détaillée ci-dessous.

Selon une variante de réalisation, le dispositif d'authentification 17 sert en outre de système de contrôle d'accès anti-vol. Pour ce faire, le dispositif d'authentification 17 est également configuré pour délivrer, en réaction à une action d'authentification, un signal de démarrage, nécessaire au démarrage de la machine de travail 1 et/ou un signal d'ouverture nécessaire à l'accès à la cabine de la machine de travail 1. Dans ce cas, lorsque le dispositif d'authentification 17 utilise une authentification par mot de passe, l'unité de mémoire stocke un second mot de passe et le dispositif d'authentification 17 délivre le signal de démarrage et/ou le signal d'ouverture lorsque la chaîne de caractère saisie par l'intermédiaire de l'unité de saisie correspond à ce second mot de passe.

De manière connue en soi, l'unité de commande 14 est configurée pour contrôler notamment le moteur de propulsion 11 et le dispositif d'entraînement 12 de l'appareil de manutention de charge 6 en fonction des demandes d'actionnement du moteur de propulsion 11 et de l'appareil de manutention de charge 6 respectivement délivrées par l'organe de commande 13 et l'organe de commande 15.

Par ailleurs, l'unité de commande 14 compare la valeur V représentative de l'état de charge de l'unité de stockage de l'énergie électrique 10 et la compare avec des seuils afin d'autoriser ou interdire certaines opérations de la machine de travail et/ou alerter l'opérateur du déchargement de l'unité de stockage de l'énergie électrique 10 au-delà d'un seuil.

Selon une variante de réalisation, l'unité de commande 14 compare la valeur V à cinq seuils V₁, V₂, V₃, V₄, V₅ qui sont mentionnés ici par ordre croissant de sorte que les inégalités suivantes V₁< V₂ < V₃ < V₄ < V₅ sont respectées.

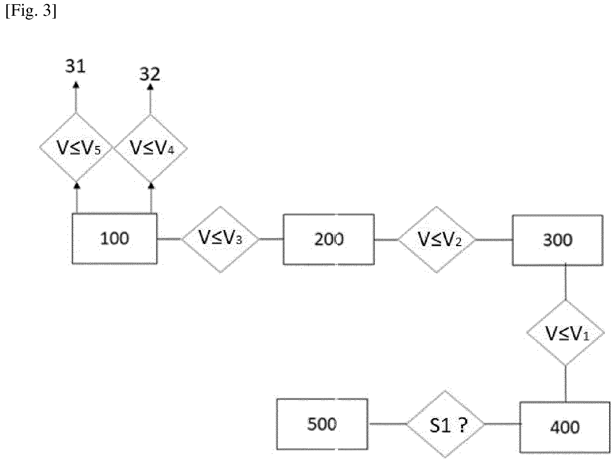

La figure 3 illustre une machine à états mise en œuvre par l'unité de commande 14 et comportant les différents modes de fonctionnement de la machine de travail lors d'un cycle de décharge de l'unité de stockage de l'énergie électrique.

Tant que la valeur V est supérieure à V₃, l'unité de commande 14 active un mode de fonctionnement normal 100 dans lequel le fonctionnement des moteurs de propulsion 11 et de manutention 12 est autorisée. Aucune restriction liée à l'état de charge de l'unité de stockage de l'énergie électrique 10 n'est, par conséquent, appliquée sur le fonctionnement de la structure de propulsion 3 et de l'appareil de manutention de charge 6.

Lorsque la valeur V devient inférieure ou égale au seuil V₅, l'unité de commande 14 génère un premier signal d'alerte 31 visuel et/ou sonore. Le signal d'alerte est, par exemple, un message qui est affiché sur le tableau de bord de la machine de travail 1. Le seuil V₅ correspond à un état de charge de l'unité de stockage de l'énergie électrique 10 qui est compris entre 42 et 56 %, avantageusement compris entre 47 et 51 % et par exemple de l'ordre de 49 %.

Lorsque la valeur V devient inférieure ou égale au seuil V₄, l'unité de commande 14 génère un deuxième signal d'alerte 32 visuel et/ou sonore, qui est par exemple affiché sur le tableau de bord de la machine de travail 1. Le seuil V₄ correspond à un état de charge de l'unité de stockage de l'énergie électrique 10 qui est compris entre 35 et 49 %, avantageusement compris entre 40 et 44 % et par exemple de l'ordre de 42 %.

Lorsque la valeur V est inférieure ou égale au seuil V₃ tout en demeurant strictement supérieure au seuil V₂, l'unité de commande 14 active un mode opérations de manutention limitées 200. Dans ce mode, la structure de propulsion 3 est autorisée à fonctionner comme dans le mode de fonctionnement normal mais des restrictions sont appliquées sur le fonctionnement de l'appareil de manutention de charge 6. Les restrictions au fonctionnement de l'appareil de manutention de charge 6 consistent, par exemple, à limiter son mouvement à la direction de sa position repliée. De manière alternative ou complémentaire, les restrictions consistent à limiter la vitesse maximale de déplacement de l'appareil de manutention de charge 6 par rapport à sa vitesse maximale en mode normal 100 et/ou à limiter la puissance disponible pour le déplacement de l'appareil de manutention de charge 6 par rapport à sa puissance disponible en mode normal. A titre d'exemple, la vitesse maximale de déplacement de l'appareil de manutention de charge 6 et/ou ou la puissance maximale disponible pour son déplacement est réduite selon une loi proportionnelle tenant compte de l'état de charge réel de l'unité de stockage de l'énergie électrique.

Le seuil V₃ correspond à un état de charge de l'unité de stockage de l'énergie électrique 10 qui est, de préférence, compris entre 27 et 41 %, avantageusement compris entre 32 et 36 % et par exemple de l'ordre de 34 %.

Lorsque la valeur V est inférieure ou égale au seuil V₂ tout en demeurant strictement supérieure au seuil V₁, l'unité de commande 14 active un mode déplacement seulement 300. Dans ce mode, les opérations de la structure de propulsion 3 sont autorisés alors que le fonctionnement de l'appareil de manutention de charge 6 est empêché. Le seuil V₂ correspond à un état de charge de l'unité de stockage de l'énergie électrique 10 qui est, de préférence, compris entre 24 et 38 %, avantageusement compris entre 29 et 33 % et par exemple de l'ordre de 31 %.

Enfin, lorsque la valeur V est inférieure ou égale au seuil V₁, l'unité de commande 14 active un mode opérations de déplacement et manutention interdites 400. Dans ce mode, le fonctionnement de la structure de propulsion 3 comme celui de l'appareil de manutention de charge 6 sont interdits.

Toutefois, l'unité de commande 14 bascule du mode opérations de déplacement et manutention interdites 400 à un mode secours 500 en réponse à l'émission d'un signal d'autorisation S1 par le dispositif d'authentification 17 pendant que le mode opérations de déplacement et manutention interdites 400 est actif. Dans le mode secours 500, le fonctionnement du moteur de propulsion 11 est autorisé bien que la valeur V représentative du niveau de charge de l'unité de stockage de l'énergie électrique soit inférieure à V1. Ceci permet à un opérateur privilégié qui s'est préalablement identifié de déplacer la machine de travail 1 vers un dispositif de rechargement de l'unité de stockage de l'énergie électrique ou vers un véhicule de transport apte à transporter la machine de travail, ce qui permet d'éviter d'immobiliser totalement la machine de travail dans des situations où sa récupération serait excessivement difficile alors que l'unité de stockage de l'énergie électrique 10 n'est pas totalement déchargée.

De manière avantageuse, le seuil V1 correspond à un état de charge compris entre 20 et 34 %, de préférence comprise entre 25 et 29 %, par exemple de l'ordre de 27 %. Le choix d'un tel seuil V₁ permet, d'une part, d'empêcher un opérateur quelconque de dégrader la durée de vie de l'unité de stockage de l'énergie électrique 10 en la déchargeant jusqu'à des niveaux de décharge profonds, situées au-delà de 20 % et d'autre part, de conserver un niveau de charge suffisant pour qu'un utilisateur privilégié puisse, après s'être authentifié, disposer de suffisamment d'énergie pour déplacer la machine de travail 1 jusqu'à un dispositif de rechargement ou un véhicule de transport, de préférence sans atteindre des niveaux de décharge profonds.

Notons que les seuils V₂, V₃, V₄, V₅ sont optionnels et que, dans d'autres modes de réalisation, l'unité de commande 14 n'utilise qu'une partie seulement des seuils précités et des actions et/ou modes de fonctionnement associés. Ainsi, selon une variante de réalisation, la machine de travail ne comporte que l'un des deux modes parmi le mode opérations de manutention limitées 200 et le mode déplacement seulement 300.

Par ailleurs, le dispositif d'évaluation de l'état de charge 16 est, avantageusement, associé à un indicateur visuel de charge 18 qui est par exemple positionné sur le tableau de bord de la machine de travail qui peut notamment être disposé dans la cabine de pilotage de la machine s'il en existe ou sur un pupitre de commande disposé dans la nacelle 9. L'indicateur visuel de charge 18 représente sous forme graphique une information représentative de la charge de l'unité de stockage de l'énergie électrique 10. De manière avantageuse, l'indicateur visuel de charge 18 est configuré de sorte qu'une information représentative d'un état totalement déchargée de l'unité de stockage de l'énergie électrique 10 corresponde au niveau du seuil V1.

Certains éléments représentés, notamment l'unité de commande 14 et le dispositif d'évaluation de l'état de charge 16 et le dispositif d'authentification 17 peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Machine de travail (1) comprenant :
- un châssis (2) ;
- une structure de propulsion (3) en contact avec le sol pour permettre un déplacement de la machine de travail (1) ;
- un appareil de manutention de charge (6) monté mobile par rapport au châssis (2) ;
- une unité de stockage de l'énergie électrique (10) qui est agencée pour fournir de l'énergie électrique à la structure de propulsion (3) et à l'appareil de manutention de charge (6) ;
- un dispositif d'évaluation de l'état de charge (16) configuré pour déterminer une valeur V représentative de l'état de charge de ladite unité de stockage de l'énergie électrique (10) ;
- un dispositif d'authentification (17) configuré pour émettre un signal d'autorisation en réponse à une action d'authentification ; et
- une unité de commande (14) qui est configurée pour :
- comparer la valeur V à un seuil V_{1 ;}
- activer un mode opérations de déplacement et manutention interdites (400) dans lequel le fonctionnement de la structure de propulsion (3) et le fonctionnement de l'appareil de manutention de charge (6) sont empêchés lorsque la valeur V est inférieure ou égale au seuil V₁; et **caractérisée en ce que** ladite unité de commande (14) est configurée pour
- activer un mode secours (500) dans lequel le fonctionnement de la structure de propulsion (3) est autorisé afin de permettre un déplacement de la machine de travail (1) en réponse à l'émission du signal d'autorisation par le dispositif d'authentification (17) pendant que le mode opérations de déplacement et manutention interdites (400) était actif.

2. Machine de travail (1) selon la revendication 1, dans laquelle l'unité de commande (14) est configurée pour :
- comparer la valeur V à un seuil V₂supérieur à V_{1 ;}
- activer un mode déplacement seulement (300) dans lequel le fonctionnement de la structure de propulsion (3) est autorisé et le fonctionnement de l'appareil de manutention de charge (6) est empêché lorsque la valeur V est inférieure ou égale au seuil V₂ et est supérieure au seuil V₁.

3. Machine de travail (1) selon la revendication 2, dans laquelle l'unité de commande (14) est configurée pour :
- comparer la valeur V à un seuil V₃supérieur à V_{2 ;}
- activer un mode opérations de manutention limitées dans lequel le fonctionnement de la structure de propulsion (3) est autorisé et le fonctionnement de l'appareil de manutention de charge (6) est restreint lorsque la valeur V est inférieure ou égale au seuil V₃ et supérieure au seuil V₂ ; et
- activer un mode normal (100) dans lequel le fonctionnement de la structure de propulsion (3) et le fonctionnement de l'appareil de manutention de charge (6) sont autorisés lorsque la valeur V est supérieure au seuil V₃.

4. Machine de travail (1) selon la revendication 1, dans laquelle l'unité de commande (14) est configurée pour :
- comparer la valeur V à un seuil V₃supérieur à V_{1 ;}
- activer un mode opérations de manutention limitées dans lequel le fonctionnement de la structure de propulsion (3) est autorisé et le fonctionnement de l'appareil de manutention de charge (6) est restreint lorsque la valeur V est inférieure ou égale au seuil V₃ ; et
- activer un mode normal (100) dans lequel le fonctionnement de la structure de propulsion (3) et le fonctionnement de l'appareil de manutention de charge (6) sont autorisés lorsque la valeur V est supérieure au seuil V₃.

5. Machine de travail (1) selon la revendication 3 ou 4, dans laquelle dans l'unité de commande (14) est configurée de sorte que, dans le mode opérations de manutention limitées (200), la restriction au fonctionnement de l'appareil de manutention de charge (6) est choisie parmi une limitation aux opérations de déplacement de l'appareil de manutention de charge (6) en direction d'une position repliée, une limitation de la vitesse maximale de déplacement de l'appareil de manutention de charge (6) par rapport à une vitesse maximale de déplacement de l'appareil de manutention de charge dans le mode normal (100), une limitation de la puissance maximale disponible pour le déplacement de l'appareil de manutention de charge (6) par rapport à une puissance maximale disponible pour le déplacement de l'appareil de manutention de charge dans le mode normal (100) et l'une quelconque de leur combinaisons.

6. Machine de travail (1) selon l'une quelconque des revendications 1 à 5, dans laquelle l'unité de commande (14) est configurée pour :
- comparer la valeur V à un seuil V₄supérieur à V_{1 ;}et
- générer un signal d'alerte lorsque la valeur est inférieure ou égale à V₄.

7. Machine de travail (1) selon l'une quelconque des revendications 1 à 6, comprenant en outre un indicateur visuel de l'état de charge de l'unité de stockage de l'énergie, l'indicateur visuel étant configuré pour délivrer une information représentative d'un état complètement déchargée de l'unité de stockage de l'énergie électrique (10) lorsque la valeur V est inférieure ou égale à V₁.

8. Machine de travail (1) selon l'une quelconque des revendications 1 à 7, dans laquelle le seuil V1 correspond à un état de charge de l'unité de stockage de l'énergie électrique (10) qui est compris entre 20 et 34 %.

9. Machine de travail (1) selon l'une quelconque des revendications 1 à 8, dans lequel le dispositif d'authentification (17) comporte une unité de mémoire stockant un mot de passe, une unité de saisie pour saisir une chaîne de caractère, le dispositif d'authentification (17) étant configuré pour émettre le signal d'autorisation lorsque la chaîne de caractère correspond au mot de passe mémorisé.

10. Machine de travail (1) selon l'une quelconque des revendications 1 à 9, dans laquelle la structure de propulsion (3) comporte une moteur de propulsion électrique (11) qui est accouplé à au moins un essieu (4, 5) de la machine de travail (1) et qui est alimenté en énergie par l'unité de stockage de l'énergie électrique (10) et dans laquelle l'appareil de manutention de charge (6) comporte un moteur de manutention électrique (12) qui est accouplé à une pompe hydraulique d'une circuit hydraulique configuré pour déplacer un bras de levage (7) et qui est alimenté en énergie par l'unité de stockage de l'énergie électrique (10).

11. Procédé de commande d'une machine de travail (1) comprenant un châssis (2) ; une structure de propulsion (3) en contact avec le sol pour permettre un déplacement de la machine de travail (1) ; un appareil de manutention de charge (6) monté mobile par rapport au châssis (2), et une unité de stockage de l'énergie électrique (10) qui est agencée pour fournir de l'énergie électrique à la structure de propulsion (3) et à l'appareil de manutention de charge (6) ; le procédé de commande comportant les étapes suivantes :
- déterminer une valeur V représentative de l'état de charge de ladite unité de stockage de l'énergie électrique (10) ;
- comparer la valeur V à un seuil V_{1 ;}
- activer un mode opérations de déplacement et manutention interdites (400) dans lequel le fonctionnement de la structure de propulsion (3) et le fonctionnement de l'appareil de manutention de charge (6) sont empêchés lorsque la valeur V est inférieure ou égale au seuil V₁; et **caractérisé en ce que** ledit procédé de commande comportant l'étape suivante :
- activer un mode secours (500) dans lequel le fonctionnement de la structure de propulsion (3) est autorisé afin de permettre un déplacement de la machine de travail (1) en réponse à l'émission d'un signal d'autorisation par un dispositif d'authentification (17) en réponse à une action d'authentification pendant que le mode opérations de déplacement et manutention interdites était actif.

12. Procédé de commande d'une machine de travail (1) selon la revendication 11, comportant en outre les étapes suivantes :
- comparer la valeur V à un seuil V₂supérieur à V_{1 ;}
- activer un mode déplacement seulement (300) dans lequel le fonctionnement de la structure de propulsion (3) est autorisé et le fonctionnement de l'appareil de manutention de charge (6) est empêché lorsque la valeur V est inférieure ou égale au seuil V₂ et est supérieure au seuil V₁.

13. Procédé de commande d'une machine de travail (1) selon la revendication 12, comportant en outre les étapes suivantes :
- comparer la valeur V à un seuil V₃supérieur à V_{2 ;}
- activer un mode opérations de manutention limitées dans lequel le fonctionnement de la structure de propulsion (3) est autorisé et le fonctionnement de l'appareil de manutention de charge (6) est restreint lorsque la valeur V est inférieure ou égale au seuil V₃ et supérieure au seuil V₂ ; et
- activer un mode normal (100) dans lequel le fonctionnement de la structure de propulsion (3) et le fonctionnement de l'appareil de manutention de charge (6) sont autorisés lorsque la valeur V est supérieure au seuil V₃.

14. Procédé de commande d'une machine de travail (1) selon la revendication 11, comportant en outre les étapes suivantes :
- comparer la valeur V à un seuil V₃supérieur à V_{1 ;}
- activer un mode opérations de manutention limitées dans lequel le fonctionnement de la structure de propulsion (3) est autorisé et le fonctionnement de l'appareil de manutention de charge (6) est restreint lorsque la valeur V est inférieure ou égale au seuil V₃ ; et
- activer un mode normal (100) dans lequel le fonctionnement de la structure de propulsion (3) et le fonctionnement de l'appareil de manutention de charge (6) sont autorisés lorsque la valeur V est supérieure au seuil V₃.

## Patentansprüche

1. Arbeitsmaschine (1) mit:
- einem Fahrgestell (2);
- einer in Bodenkontakt stehenden Antriebsstruktur (3), um eine Bewegung der Arbeitsmaschine (1) zu ermöglichen;
- einer Lasthandhabungsvorrichtung (6), die bewegbar in Bezug auf das Fahrgestell (2) angebracht ist;
- einem elektrischen Energiespeicher (10), der so ausgelegt ist, dass er die Antriebsstruktur (3) und die Lastbeförderungsvorrichtung (6) mit elektrischer Energie versorgt;
- einer Ladezustandsbewertungsvorrichtung (16), die so konfiguriert ist, dass sie einen Wert V ermittelt, der den Ladezustand der elektrischen Energiespeichereinheit (10) wiedergibt;
- eine Authentifizierungsvorrichtung (17), die so konfiguriert ist, dass sie als Reaktion auf eine Authentifizierungsaktion ein Autorisierungssignal ausgibt; und
- eine Steuereinheit (14), die konfiguriert ist, um:
- den Wert V mit einem Schwellenwert V₁ zu vergleichen;
- einen Modus für verbotene Bewegungs- und Handhabungsvorgänge (400) zu aktivieren, in dem der Betrieb der Antriebsstruktur (3) und der Betrieb der Lasthandhabungsvorrichtung (6) verhindert werden, wenn der Wert V kleiner oder gleich dem Schwellenwert V₁ ist, und
**dadurch gekennzeichnet, dass** die Steuereinheit (14) konfiguriert ist, um:
- einen Notfallmodus (500) zu aktivieren, in dem der Betrieb der Antriebsstruktur (3) zugelassen wird, um eine Bewegung der Arbeitsmaschine (1) als Reaktion auf die Ausgabe des Freigabesignals durch die Authentifizierungsvorrichtung (17) zu ermöglichen, während der Modus Bewegung und Handhabung verboten (400) aktiv war.

2. Arbeitsmaschine (1) gemäß Anspruch 1, wobei die Steuereinheit (14) konfiguriert ist, um:
- den Wert V mit einem Schwellenwert V2 zu vergleichen, der größer als V1 ist;
- einen reinen Fahrmodus (300) zu aktivieren, wobei der Betrieb der Antriebsstruktur (3) zugelassen und der Betrieb der Lasthandhabungsvorrichtung (6) verhindert wird, wenn der Wert V kleiner oder gleich dem Schwellenwert V2 und größer als der Schwellenwert V1 ist.

3. Arbeitsmaschine (1) gemäß Anspruch 2, wobei die Steuereinheit (14) konfiguriert ist, um:
- den Wert V mit einem Schwellenwert V₃ zu vergleichen, der größer als V₂ ist;
- einen Modus für eingeschränkte Handhabungsvorgänge zu aktivieren, wobei der Betrieb der Antriebsstruktur (3) zulässig ist und der Betrieb der Lasthandhabungsvorrichtung (6) eingeschränkt ist, wenn der Wert V kleiner oder gleich dem Schwellenwert V₃ und größer als der Schwellenwert V₂ ist; und
- einen Normalmodus (100) zu aktivieren, wobei der Betrieb der Antriebsstruktur (3) und der Betrieb der Lasthandhabungsvorrichtung (6) zulässig sind, wenn der Wert V größer als der Schwellenwert V₃ ist.

4. Arbeitsmaschine (1) gemäß Anspruch 1, wobei die Steuereinheit (14) konfiguriert ist, um:
- den Wert V mit einem Schwellenwert V₃ zu vergleichen, der größer als V₁ ist;
- einen Modus für eingeschränkte Handhabungsvorgänge zu aktivieren, wobei der Betrieb der Antriebsstruktur (3) zugelassen und der Betrieb der Lasthandhabungsvorrichtung (6) eingeschränkt ist, wenn der Wert V kleiner oder gleich dem Schwellenwert V₃ ist; und
- einen Normalmodus (100) zu aktivieren, wobei der Betrieb der Antriebsstruktur (3) und der Betrieb der Lasthandhabungsvorrichtung (6) zulässig sind, wenn der Wert V größer als der Schwellenwert V₃ ist.

5. Arbeitsmaschine (1) gemäß Anspruch 3 oder 4, wobei die Steuereinheit (14) so konfiguriert ist, dass im Modus für eingeschränkte Handhabungsvorgänge (200) die Einschränkung des Betriebs der Lasthandhabungsvorrichtung (6) aus einer Begrenzung der Bewegungsvorgänge der Lasthandhabungsvorrichtung (6) in Richtung einer eingeklappten Position, einer Begrenzung der maximalen Bewegungsgeschwindigkeit der Lasthandhabungsvorrichtung (6) im Verhältnis zu einer maximalen Bewegungsgeschwindigkeit der L Lasthandhabungsvorrichtung im Normalbetrieb (100), einer Begrenzung der für die Bewegung des Lasthandhabungsvorrichtung (6) verfügbaren Höchstleistung im Vergleich zu einer für die Bewegung des Lastbeförderungsgeräts im Normalmodus (100) verfügbaren Höchstleistung und einer beliebigen Kombination davon ausgewählt ist.

6. Arbeitsmaschine (1) gemäß einem der Ansprüche 1 bis 5, wobei die Steuereinheit (14) konfiguriert ist, um:
- den Wert V mit einem Schwellenwert V₄ zu vergleichen, der größer als V₁ ist; und
- ein Warnsignal zu erzeugen, wenn der Wert kleiner oder gleich V₄ ist.

7. Arbeitsmaschine (1) gemäß einem der Ansprüche 1 bis 6, die weiterhin eine visuelle Anzeige für den Ladezustand des Energiespeichers umfasst, wobei die visuelle Anzeige konfiguriert ist, um eine Information auszugeben, die einen vollständig entladenen Zustand des Energiespeichers (10) darstellt, wenn der Wert V kleiner oder gleich V₁ ist.

8. Arbeitsmaschine (1) gemäß einem der Ansprüche 1 bis 7, wobei der Schwellenwert VI einem Ladezustand des elektrischen Energiespeichers (10) entspricht, der zwischen 20 und 34 % liegt.

9. Arbeitsmaschine (1) gemäß einem der Ansprüche 1 bis 8, wobei die Authentifizierungsvorrichtung (17) eine Speichereinheit zum Speichern eines Passworts und eine Eingabeeinheit zum Eingeben einer Zeichenfolge umfasst, wobei die Authentifizierungsvorrichtung (17) konfiguriert ist, um das Autorisierungssignal auszugeben, wenn die Zeichenfolge mit dem gespeicherten Passwort übereinstimmt.

10. Arbeitsmaschine (1) gemäß einem der Ansprüche 1 bis 9, wobei die Antriebsstruktur (3) einen elektrischen Antriebsmotor (11) umfasst, der mit mindestens einer Achse (4, 5) der Arbeitsmaschine (1) gekoppelt ist und von dem elektrischen Energiespeicher (10) mit Energie versorgt wird, und wobei die Lasthandhabungsvorrichtung (6) einen elektrischen Handhabungsmotor (12) umfasst, der mit einer Hydraulikpumpe eines Hydraulickreislaufs gekoppelt ist, der zum Bewegen eines Hubarms (7) konfiguriert ist, und der von dem elektrischen Energiespeicher (10) mit Energie versorgt wird.

11. Verfahren zum Steuern einer Arbeitsmaschine (1), umfassend einen Rahmen (2); eine in Bodenkontakt stehende Antriebsstruktur (3), um eine Bewegung der Arbeitsmaschine (1) zu ermöglichen; eine Lasthandhabungsvorrichtung (6), die bewegbar in Bezug auf das Fahrgestell (2) angebracht ist, und einen elektrischen Energiespeicher (10), der so angeordnet ist, dass er die Antriebsstruktur (3) und die Lasthandhabungsvorrichtung (6) mit elektrischer Energie zur Verfügung stellt; wobei das Steuerungsverfahren die folgenden Schritte umfasst:
Bestimmen eines Wertes V, der den Ladezustand des elektrischen Energiespeichers (10) darstellt;
- Vergleichen des Wertes V mit einem Schwellenwert V₁;
- Aktivieren eines Betriebsmodus, wobei Bewegung und Handhabung verboten sind (400), wobei der Betrieb der Antriebsstruktur (3) und der Betrieb der Lasthandhabungsvorrichtung (6) verhindert werden, wenn der Wert V kleiner oder gleich dem Schwellenwert V1 ist; und
**dadurch gekennzeichnet, dass** das Steuerverfahren den folgenden Schritt umfasst:
- Aktivieren eines Notmodus (500), wobei der Betrieb der Antriebsstruktur (3) freigegeben wird, um eine Bewegung der Arbeitsmaschine (1) zu ermöglichen, als Reaktion auf die Ausgabe eines Freigabesignals durch eine Authentifizierungsvorrichtung (17) als Reaktion auf eine Authentifizierungsaktion, während der Modus Bewegung und Handhabung verboten aktiv war.

12. Verfahren zum Steuern einer Arbeitsmaschine (1) gemäß Anspruch 11, das weiterhin die folgenden Schritte umfasst:
- Vergleichen des Wertes V mit einem Schwellenwert V₂, der größer als V₁ ist;
- Aktivieren eines reinen Fahrmodus (300), wobei der Betrieb der Antriebsstruktur (3) zugelassen und der Betrieb der Lasthandhabungsvorrichtung (6) verhindert wird, wenn der Wert V kleiner oder gleich dem Schwellenwert V₂ und größer als der Schwellenwert V₁ ist.

13. Verfahren zum Steuern einer Arbeitsmaschine (1) gemäß Anspruch 12, das weiterhin die folgenden Schritte umfasst:
- Vergleichen des Wertes V mit einem Schwellenwert V₃, der größer ist als V₂;
- Aktivieren eines Modus für eingeschränkte Handhabungsvorgänge, wobei der Betrieb der Antriebsstruktur (3) zugelassen und der Betrieb der Lasthandhabungsvorrichtung (6) eingeschränkt ist, wenn der Wert V kleiner oder gleich dem Schwellenwert V₃ und größer als der Schwellenwert V₂ ist; und
- Aktivieren eines Normalmodus (100), wobei der Betrieb der Antriebsstruktur (3) und der Betrieb der Lasthandhabungsvorrichtung (6) zulässig sind, wenn der Wert V größer als der Schwellenwert V₃ ist.

14. Verfahren zum Steuern einer Arbeitsmaschine (1) gemäß Anspruch 11, das weiterhin die folgenden Schritte umfasst:
- Vergleichen des Wertes V mit einem Schwellenwert V₃, der größer als V₁ ist;
- Aktivieren eines Modus für eingeschränkte Handhabungsvorgänge, wobei der Betrieb der Antriebsstruktur (3) zulässig ist und der Betrieb der Lasthandhabungsvorrichtung (6) eingeschränkt ist, wenn der Wert V kleiner oder gleich dem Schwellenwert V₃ ist; und
- Aktivieren eines Normalmodus (100), wobei der Betrieb der Antriebsstruktur (3) und der Betrieb der Lasthandhabungsvorrichtung (6) zulässig sind, wenn der Wert V größer als der Schwellenwert V₃ ist.

## Claims

1. A work machine (1) comprising:
- a frame (2);
- a propulsion structure (3) in contact with the ground for making movement of the work machine (1) possible;
- a load-handling apparatus (6) mounted such as to be able to move with respect to the frame (2);
- an electrical energy storage unit (10) which is arranged to supply electrical energy to the propulsion structure (3) and to the load-handling apparatus (6);
- a device (16) for evaluating state of charge configured to determine a value V which is representative of the state of charge of said electrical energy storage unit (10);
- an authentication device (17) configured to send an authorization signal in response to an authentication action; and
- a control unit (14) which is configured to:
- compare the value V with a threshold V₁;
- activate a mode (400) in which movement and handling operations are prohibited, in which the operation of the propulsion structure (3) and the operation of the load-handling apparatus (6) are prevented when the value V is lower than or equal to the threshold V₁; and **characterized in that** said control unit (14) is configured to activate a rescue mode (500) in which the operation of the propulsion structure (3) is authorized in order to make movement of the work machine (1) possible in response to the sending of the authorization signal by the authentication device (17) while the mode (400) in which movement and handling operations are prohibited was active.

2. The work machine (1) as claimed in claim 1, wherein the control unit (14) is configured to:
- compare the value V with a threshold V₂ which is higher than V₁;
- activate a movement-only mode (300) in which the operation of the propulsion structure (3) is authorized and the operation of the load-handling apparatus (6) is prevented when the value V is lower than or equal to the threshold V₂ and is higher than the threshold V₁.

3. The work machine (1) as claimed in claim 2, wherein the control unit (14) is configured to:
- compare the value V with a threshold V₃ which is higher than V₂;
- activate a mode in which handling operations are limited, in which the operation of the propulsion structure (3) is authorized and the operation of the load-handling apparatus (6) is restricted when the value V is lower than or equal to the threshold V₃ and higher than the threshold V₂; and
- activate a normal mode (100) in which the operation of the propulsion structure (3) and the operation of the load-handling apparatus (6) are authorized when the value V is higher than the threshold V₃.

4. The work machine (1) as claimed in claim 1, wherein the control unit (14) is configured to:
- compare the value V with a threshold V₃ which is higher than V₁;
- activate a mode in which handling operations are limited, in which the operation of the propulsion structure (3) is authorized and the operation of the load-handling apparatus (6) is restricted when the value V is lower than or equal to the threshold V₃; and
- activate a normal mode (100) in which the operation of the propulsion structure (3) and the operation of the load-handling apparatus (6) are authorized when the value V is higher than the threshold V₃.

5. The work machine (1) as claimed in claim 3 or 4, wherein the control unit (14) is configured so that, in the mode (200) in which handling operations are limited, the restriction on the operation of the load-handling apparatus (6) is chosen from among a limitation to the operations of moving the load-handling apparatus (6) in the direction of a folded position, a limitation on the maximum movement speed of the load-handling apparatus (6) with respect to a maximum movement speed of the load-handling apparatus in the normal mode (100), a limitation on the maximum power available for the movement of the load-handling apparatus (6) with respect to a maximum power available for the movement of the load-handling apparatus in the normal mode (100) and any combination thereof.

6. The work machine (1) as claimed in any one of claims 1 to 5, wherein the control unit (14) is configured to:
- compare the value V with a threshold V₄ which is higher than V₁; and
- generate an alert signal when the value is lower than or equal to V₄.

7. The work machine (1) as claimed in any one of claims 1 to 6, further comprising a visual indicator of the state of charge of the energy storage unit, the visual indicator being configured to deliver information which is representative of a completely discharged state of the electrical energy storage unit (10) when the value V is lower than or equal to V₁.

8. The work machine (1) as claimed in any one of claims 1 to 7, wherein the threshold V₁ corresponds to a state of charge of the electrical energy storage unit (10) which is comprised between 20 and 34%.

9. The work machine (1) as claimed in any one of claims 1 to 8, wherein the authentication device (17) comprises a memory unit storing a password, and an input unit for inputting a character string, the authentication device (17) being configured to send the authorization signal when the character string corresponds to the stored password.

10. The work machine (1) as claimed in any one of claims 1 to 9, wherein the propulsion structure (3) comprises an electric propulsion motor (11) which is coupled to at least one axle (4, 5) of the work machine (1) and which is supplied with energy by the electrical energy storage unit (10) and wherein the load-handling apparatus (6) comprises an electric handling motor (12) which is coupled to a hydraulic pump of a hydraulic circuit configured to move a lifting arm (7) and which is supplied with energy by the electrical energy storage unit (10).

11. A method for controlling a work machine (1) comprising a frame (2); a propulsion structure (3) in contact with the ground for making movement of the work machine (1) possible; a load-handling apparatus (6) mounted so as to be able to move with respect to the frame (2), and an electrical energy storage unit (10) which is arranged to supply electrical energy to the propulsion structure (3) and to the load-handling apparatus (6); the control method comprising the following steps:
- determining a value V which is representative of the state of charge of said electrical energy storage unit (10);
- comparing the value V with a threshold V₁;
- activating a mode (400) in which movement and handling operations are prohibited, in which the operation of the propulsion structure (3) and the operation of the load-handling apparatus (6) are prevented when the value V is lower than or equal to the threshold V₁; **characterized in that** said control method comprising the following step:
- activating a rescue mode (500) in which the operation of the propulsion structure (3) is authorized in order to make movement of the work machine (1) possible in response to the sending of an authorization signal by an authentication device (17) in response to an authentication action while the mode in which movement and handling operations are prohibited was active.

12. The method for controlling a work machine (1) as claimed in claim 11, further comprising the following steps:
- comparing the value V with a threshold V₂ which is higher than V₁;
- activating a movement-only mode (300) in which the operation of the propulsion structure (3) is authorized and the operation of the load-handling apparatus (6) is prevented when the value V is lower than or equal to the threshold V₂ and is higher than the threshold V₁.

13. The method for controlling a work machine (1) as claimed in claim 12, further comprising the following steps:
- comparing the value V with a threshold V₃ which is higher than V₂;
- activating a mode in which handling operations are limited, in which the operation of the propulsion structure (3) is authorized and the operation of the load-handling apparatus (6) is restricted when the value V is lower than or equal to the threshold V₃ and higher than the threshold V₂; and
- activating a normal mode (100) in which the operation of the propulsion structure (3) and the operation of the load-handling apparatus (6) are authorized when the value V is higher than the threshold V₃.

14. The method for controlling a work machine (1) as claimed in claim 11, further comprising the following steps:
- comparing the value V with a threshold V₃ which is higher than V₁;
- activating a mode in which handling operations are limited, in which the operation of the propulsion structure (3) is authorized and the operation of the load-handling apparatus (6) is restricted when the value V is lower than or equal to the threshold V₃; and
- activating a normal mode (100) in which the operation of the propulsion structure (3) and the operation of the load-handling apparatus (6) are authorized when the value V is higher than the threshold V₃.
